(19) Europäisches Patentamt
European Patent Office
Office européen des brevets

(11) **EP 4 261 777 B1**

(12) **FASCICULE DE BREVET EUROPEEN**

(45) Date de publication et mention de la délivrance du brevet:
**13.05.2026 Bulletin 2026/20**

(21) Numéro de dépôt: **22305515.3**

(22) Date de dépôt: **11.04.2022**

(51) Classification Internationale des Brevets (IPC):
***G06T 7/246*** *(2017.01)*

(52) Classification Coopérative des Brevets (CPC):
**G06T 7/248;** G06T 2207/10016; G06T 2207/20084;
G06T 2207/30196; G06T 2207/30232

(54) **PROCÉDÉ, PROGRAMME D'ORDINATEUR, DISPOSITIF ET SYSTÈME DE SUIVI D'UN OBJET CIBLE**

VERFAHREN, COMPUTERPROGRAMM, VORRICHTUNG UND SYSTEM ZUR VERFOLGUNG EINES ZIELOBJEKTS

METHOD, COMPUTER PROGRAM, DEVICE AND SYSTEM FOR MONITORING A TARGET OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**18.10.2023 Bulletin 2023/42**

(73) Titulaire: **BULL SAS**
**78340 Les Clayes-Sous-Bois (FR)**

(72) Inventeur: **METGE, Baptiste**
**38000 Grenoble (FR)**

(74) Mandataire: **IPAZ**
**Parc Les Algorithmes**
**Bâtiment Platon**
**91190 Saint Aubin (FR)**

(56) Documents cités:
**EP-A1- 3 839 816       CA-A1- 3 156 840**
**US-A1- 2022 004 768**

- **LEE GIYOUNG ET AL: "Trajectory-based vehicle tracking at low frame rates", EXPERT SYSTEMS WITH APPLICATIONS, ELSEVIER, AMSTERDAM, NL, vol. 80, 14 March 2017 (2017-03-14), pages 46 - 57, XP029974864, ISSN: 0957-4174, DOI: 10.1016/J.ESWA.2017.03.023**
- **LEE GIYOUNG ET AL: "Tracking Multiple Moving Vehicles in Low Frame Rate Videos Based on Trajectory Information", 2013 IEEE INTERNATIONAL CONFERENCE ON SYSTEMS, MAN, AND CYBERNETICS, IEEE, 13 October 2013 (2013-10-13), pages 3615 - 3620, XP032556966, DOI: 10.1109/SMC.2013.616**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un procédé de suivi d'un objet cible dans des images prises par au moins une caméra. Elle concerne également un programme d'ordinateur, un dispositif et un système mettant en œuvre un tel procédé.

Le domaine de l'invention est de manière générale le domaine du suivi d'objets à partir d'images captées par des caméras, également appelé tracking en anglais, et en particulier en temps réel.

### État de la technique

Les villes s'équipent de plus en plus en caméras de vidéosurveillance dont le nombre augmente plus vite que le nombre d'opérateurs humains. Il est très difficile de suivre un objet cible, tel qu'une personne ou un véhicule. Si l'opérateur est dérangé, il peut perdre l'objet cible, et le retrouver peut être particulièrement fastidieux. Le suivi de plusieurs objets cibles à la fois est encore plus difficile.

On connait des solutions de suivi (« tracking » en anglais) basées sur des modèles de deep learning et notamment des modèles de ré-identification. Ces solutions ont pour objectif de traiter les images d'un flux d'images provenant d'une ou plusieurs caméras en vue d'identifier l'objet cible, et plus généralement l'ensemble des objets qui se déplacent, dans chaque image dudit flux d'images. De manière classique chaque image du flux d'images est d'abord traitée par un détecteur d'objets, tel qu'un détecteur d'objet mettant en œuvre le modèle RESNET50, en vue d'identifier au moins un objet et sa position dans l'image. Puis, chaque objet est identifié par comparaison de sa signature visuelle avec celle des objets identifiés dans les images précédemment traitées. Ainsi, un même objet cible peut être identifié sur toutes les images sur lesquelles il apparait et une trajectoire, ou une tracklet, dudit objet peut être déterminée en suivant son déplacement au sein de chaque image, et donc de la scène imagée. Les documents US2022/004768A1, EP3839816A1 et CA3156840A1 décrivent des différentes approches pour le suivi d'objets basé sur l'analyse d'images.

Cependant, ces solutions sont complexes, gourmandes en énergie et en ressources de calcul. Ces inconvénients limitent le déploiement de ces solutions dans le monde réel.

Un but de la présente invention est de remédier à au moins un des inconvénients de l'état de la technique.

Un autre but de l'invention est de proposer une solution de suivi d'objet moins gourmande en énergie et en ressources de calcul tout en présentant des performances similaires, voire identiques, aux solutions actuelles.

### Exposé de l'invention

L'invention propose d'atteindre au moins l'un des buts précités par un procédé de suivi d'un objet cible dans un flux d'images capté par une caméra à une fréquence de captation, $F_c$, ledit procédé comprenant plusieurs itérations d'une phase de suivi mise en œuvre individuellement pour plusieurs images, dite traitées, dudit flux d'images, et comprenant les étapes suivantes :

- détection dans l'image traitée d'au moins un objet et de sa position,
et
- identification dudit objet cible parmi l'au moins un objet détecté dans ladite image traitée ;

caractérisé en ce que ladite phase de suivi est réalisée à une fréquence de détection, $F_s$, inférieure à ladite fréquence de captation $F_c$, de sorte que deux images traitées lors de deux itérations successives de la phase de suivi sont séparées d'au moins une image non-traitée à laquelle ladite phase de suivi n'est pas appliquée.

Ainsi, l'invention propose de réaliser un suivi d'un objet cible en traitant uniquement une partie des images du flux d'images capté par la caméra. Autrement dit, l'invention propose de renoncer à traiter toutes les images du flux d'images et propose de ne traiter que certaines des images du flux d'images. Ainsi, la solution proposée par la présente invention est moins gourmande en énergie et en ressources de calcul comparée aux solutions actuelles qui proposent de traiter toutes les images d'un flux d'images.

De plus, l'inventeur de la présente demande a remarqué que le fait de traiter une partie seulement des images ne diminue pas, ou très peu, les performances de suivi. En effet, l'inventeur a remarqué que la fréquence de captation des caméras actuelles est telle que le déplacement d'un objet cible peut être déduit et suivi de manière performante et fidèle à partir d'une partie seulement des images formant un flux d'images capté par la caméra. Cette observation est d'autant plus vraie lorsque la vitesse de déplacement de l'objet cible est basse, tel que des humains par exemple.

Dans la présente demande par « objet » ou « objet cible » on entend tout type d'objet, tel qu'un humain, un animal, une voiture, etc.

Dans la présente demande par « tracklet », on entend un ensemble d'au moins une image, ou zone d'image, appartenant à un même objet et captée par une caméra.

De manière connue, la distance d'apparence entre deux images peut être calculée en générant une signature numérique pour chacune des images, par exemple par un modèle intelligent tel qu'un réseau neuronal, puis en calculant la distance, euclidienne ou cosinus, entre ces deux signatures numériques.

Par « caméra », on entend tout type d'appareil d'acquisition d'une image, telle que tout type de caméra de type RGB, LIDAR, thermique, 3D, etc.

Par « image traitée », on entend une image du flux d'images à laquelle la phase de suivi est appliquée.

Par opposition, par « image non-traitée » on entend une image du flux d'images à laquelle la phase de suivi n'est pas appliquée.

Suivant des modes de réalisation, le procédé selon l'invention peut comprendre une étape d'estimation de la position de l'objet cible à un instant se trouvant entre les instants de captation de deux images traitées lors deux itérations successives de la phase de suivi, en fonction des positions dudit objet cible dans lesdites images traitées.

Une telle estimation peut être réalisée suivant toute relation prédéterminée.

Selon des exemples de réalisation, la position de l'objet cible audit instant peut être réalisée suivant une loi de déplacement linéaire. Autrement dit, l'objet cible est considéré comme se déplaçant linéairement entre ses positions détectées dans deux images traitées. Ainsi, pour chaque instant se trouvant entre les instants de captation des images traitées, la position de l'objet cible est déterminée sur la trajectoire linéaire rejoignant les positions de l'objet cible dans lesdites images traitées.

Par exemple, soient P1 et P2 les positions de l'objet cible sur deux images traitées IM1 et IM2 captées respectivement aux instants T1 et T2. La position de l'objet cible à chaque instant intermédiaire TIi se trouvant entre les instants T1 et T2, tels que $T1 < TI_i < T2$ peut être déterminée en estimant que l'objet cible s'est déplacé linéairement, et à vitesse constante, entre les positions P1 et P2 pendant la durée (T2-T1).

En utilisant le même principe, il est aussi possible de déterminer la position de l'objet cible dans une image non-traitée, captée ente les instants de captation de deux images traitées lors de deux itérations successives de la phase de suivi, en fonction des positions de l'objet cible détectées dans lesdites images traitées.

Suivant des modes de réalisation non limitatifs, la fréquence de réalisation de la phase de suivi peut être déterminée en fonction d'un nombre d'images séparant les images traitées.

Par exemple, la phase de suivi peut être mise en œuvre pour chaque image toutes les N image(s), avec $N \geq 2$, et préférentiellement $N \geq 20$, de sorte que deux itérations successives de la phase de détection sont appliquées à deux images séparées, dans le temps, d'au moins une image, et en particulier de N images, non traitées.

Le nombre N peut, de manière nullement limitative, être déterminée en fonction de la fréquence de captation de la caméra, et plus généralement de la fréquence de captation des images dans le flux d'images.

Dans ce cas, la phase de suivi peut être réalisée pour une image traitée $IM_1$. La prochaine image qui sera traitée par la prochaine itération de la phase de suivi sera l'image $IM_N$. Par exemple, si N=20, les images traitées seront les images $IM_1$, $IM_{21}$, $IM_{41}$, etc. captée par la caméra.

Suivant des modes de réalisation non limitatifs, la fréquence de réalisation de la phase de suivi peut être déterminée en fonction d'une durée séparant des instants de captation des images traitées.

Suivant des exemples non limitatifs, la phase de suivi peut être réalisée pour chaque image captée toutes les DUR secondes.

Par exemple, la durée DUR séparant deux images traitées lors de deux itérations successives de la phase de suivi peut être comprise entre 1 et 5 secondes et en particulier entre 2 et 3 secondes. La durée DUR n'est pas forcément un entier. Dans ce cas, la phase de suivi peut être réalisée pour une image traitée $IM_1$ captée à instant T1. La prochaine image qui sera traitée par la prochaine itération de la phase de suivi sera l'image captée un instant T2 tel que T2=T1+DUR, et ainsi de suite.

Suivant des modes de réalisation, le flux d'images peut être capté préalablement à la première itération de la phase de détection de sorte que le suivi de l'objet cible n'est pas réalisé en temps réel.

Dans ce cas, le suivi de l'objet cible peut être réalisée dans une base de données d'images, dans le cadre par exemple d'une recherche dans un passé récent.

Suivant des modes de réalisation, le procédé selon l'invention peut être mise en œuvre pour réaliser un suivi en temps réel de l'objet cible.

Dans ce cas, le procédé selon l'invention peut en outre comprendre une étape de transmission, de la caméra vers un dispositif de suivi, de chaque image traitée.

De manière particulièrement avantageuse, mais nullement limitatif, seules les images traitées peuvent être transmises au dispositif de suivi. Ainsi, les images captées par la caméra, mais qui se seront pas traitées lors de la phase de suivi ne sont pas transmises vers le dispositif de suivi. Ainsi, l'invention permet de diminuer les données transmises de la caméra vers le dispositif de suivi, et est donc moins gourmande en ressources de communication.

Suivant des modes de réalisation particulièrement avantageux dans le cadre d'un suivi en temps réel, la transmission d'une image traitée de la caméra vers le dispositif de suivi peut être réalisée sur requête dudit dispositif de suivi.

Dans ce cas, le dispositif de suivi émet une requête vers la caméra demandant à la caméra de capter une image à un instant T1 et de la lui transmettre. Le dispositif de suivi traite alors l'image reçu. Puis, à l'approche d'un instant T2 qui correspondant à l'instant de captation de la prochaine image à traiter, le dispositif de suivi émet une requête vers la caméra demandant à la caméra de capter une nouvelle image audit instant T2 et de la lui transmettre, et ainsi de suite.

Alternativement, un plan de captation d'images peut être transmis à la caméra, par exemple par le dispositif de suivi, ledit plan de captation indiquant plusieurs, voire tous les instants, de captation d'images à traiter, par exemple en début de la phase de suivi.

Suivant des modes de réalisation particulièrement avantageux dans le cadre d'un suivi en temps réel, la caméra peut être agencée pour capter uniquement les images traitées.

Autrement dit, la caméra peut être activée uniquement pour la captation des images qui seront traitées lors de la phase de suivi, et désactivée le reste du temps. Ainsi, si deux images successivement traitées par la phase de suivi sont captées aux instants T1 et T2, la caméra peut être activée aux instants T1 et T2 pour capter et transmettre les images traitées au dispositif de suivi, et désactivée entre les instants T1 et T2, ce qui permet des économies d'énergie, diminue la fatigue de la caméra et augmente sa durée de vie.

Avantageusement, l'étape de détection peut être réalisée par un modèle d'intelligence artificielle, et en particulier par un réseau neuronal, préalablement entraîné pour détecter la présence d'un objet dans une image.

Un tel modèle peut être un réseau neuronal à convolution, tel que RESNET50, entraîné pour détecter des objets dans une image et indiquer leur position. Des réseaux neuronaux pour détecter des objets et leurs positions dans des images sont bien connus de l'Homme du Métier, et ne seront donc pas décrits plus en détail ici par soucis de concision.

La position d'un objet sur une image peut par exemple correspondre au centre d'un rectangle entourant ledit objet sur ladite image. Bien entendu, il est possible de déterminer la position d'une autre manière, telle que par exemple en prenant un coin dudit rectangle, etc.

L'étape d'identification d'un objet cible sur une image traitée comprend les étapes suivantes :

- pour chaque objet détecté sur ladite image traitée, calcul d'une distance spatiale entre la position dudit objet et la position de l'objet cible détectée sur une image précédemment traitée,
- filtrage spatiale des objets en fonction desdites distances calculées et d'une valeur seuil de distance spatiale, SDS, prédéterminée,
- calcul d'une distance d'apparence entre une signature visuelle de l'objet cible détecté sur l'image précédemment traitée et une signature visuelle de chaque objet retenu après l'étape de filtrage, et
- identification de l'objet cible en fonction desdites distances d'apparence.

La valeur de seuil de distance spatiale SDS peut être déterminée par des essais.

Plus particulièrement, la SDS peut être déterminée en fonction de l'objet cible, en particulier en fonction d'une dimension de l'objet et/ou d'une vitesse de l'objet cible.

Selon l'invention la SDS est proportionnelle à la largeur de l'objet cible sur les images traitées, telle que :

$$SDS = K*L$$

avec L la largeur de l'objet cible et K un coefficient multiplicateur.

Suivant des exemples de réalisation, le coefficient multiplicateur K peut être fonction de la fréquence, ou de la cadence, d'itération de la phase de suivi. En effet, l'inventeur a observé qu'un objet cible ne peut pas se déplacer de plus de K fois sa propre largeur entre deux itérations de la phase de suivi.

Selon des exemples de réalisation K est un nombre réel tel que $K=k*D$, avec ;

- D la durée, en secondes, séparant les instants de captation de deux images traitées lors de deux itérations successives de la phase de suivi, et
- k un nombre réel.

Suivant des exemples de réalisation $1 \leq k \leq 2$

La distance d'apparence peut être la distance euclidienne ou la distance cosinus entre deux signatures visuelles de deux objets.

Au moins une signature visuelle peut être générée par un modèle d'intelligence artificielle, et en particulier par un réseau neuronal, préalablement entraîné pour cela. Des réseaux neuronaux pour générer une signature visuelle d'un objet sont bien connus de l'Homme du Métier et ne seront donc pas décrits ici plus en détail.

Selon un autre aspect de l'invention, il est proposé un programme d'ordinateur comprenant des instructions exécutables qui, lorsqu'elles sont exécutées par un appareil informatique, mettent en en œuvre toutes les étapes du procédé, selon l'invention, de suivi d'un objet cible.

Le programme d'ordinateur peut être en tout langage informatique, tel que par exemple en langage machine, en C, C++, JAVA, Python, etc.

Selon un autre aspect de l'invention, il est proposé un dispositif de suivi d'un objet cible comprenant des moyens configurés pour mettre en œuvre toutes les étapes du procédé, selon l'invention, de suivi d'un objet cible.

Le dispositif selon l'invention peut être tout type d'appareil tel qu'un serveur, un ordinateur, une tablette, un calculateur, un processeur, une puce informatique, programmé pour mettre en œuvre le procédé selon l'invention, par exemple par le programme d'ordinateur selon l'invention.

Selon un autre aspect de l'invention, il est proposé un système de suivi d'un objet cible, comprenant :

- au moins une caméra de fréquence de captation d'un flux d'images $F_c$, et
- un dispositif de suivi d'un objet cible selon l'invention.

Au moins une caméra peut être locale ou distante au dispositif de traitement. Dans ce dernier cas, la caméra peut être en communication avec le dispositif de traitement au travers d'un réseau de communication filaire ou sans fil, tel que par exemple le réseau Internet.

Dans le cas où le système comprend plusieurs caméras, ces dernières peuvent être distribuées dans l'espace par exemple au sein d'un lieu, tel qu'une gare ou un aéroport, ou dans une ville, ou encore le long d'une voie de circulation.

**Description des figures et modes de réalisation**

D'autres avantages et caractéristiques apparaîtront à l'examen de la description détaillée de modes de réalisation nullement limitatifs, et des dessins annexés sur lesquels :

- la FIGURE 1 est une représentation schématique d'un exemple de réalisation non limitatif d'un procédé selon l'invention de suivi d'un objet cible ;
- la FIGURE 2 est une représentation schématique d'un autre exemple de réalisation non limitatif d'un procédé selon l'invention de suivi d'un objet cible ;
- la FIGURE 3 est une représentation schématique d'un exemple de réalisation non limitatif d'un dispositif selon l'invention ; et
- la FIGURE 4 est une représentation schématique d'un exemple de réalisation non limitatif d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

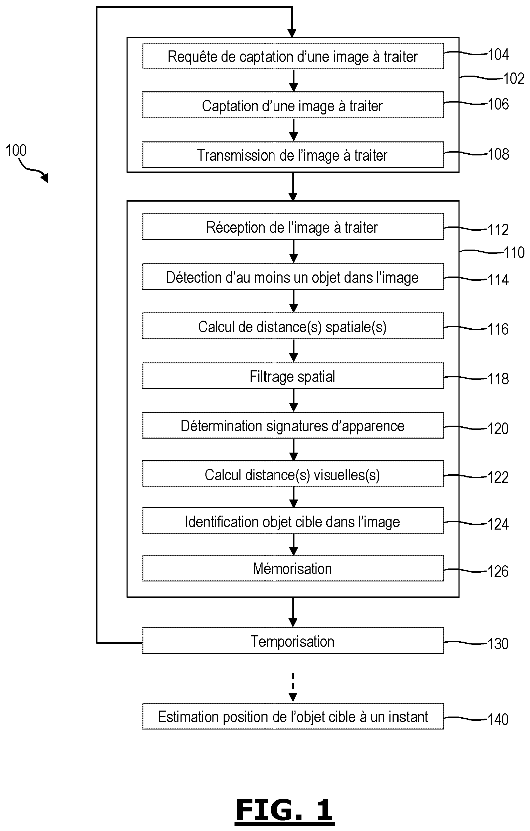

La FIGURE 1 est une représentation schématique d'un exemple de réalisation non limitatif d'un procédé selon la présente invention pour le suivi en temps réel d'un objet cible.

Le procédé 100 de la FIGURE 1 peut être utilisé pour le suivi en temps réel de tout type d'objets cibles tels que des humains, des animaux, des voitures, etc. à partir d'un flux d'image provenant d'une ou plusieurs caméras.

Dans la suite, et sans perte de généralité, il est considéré que le flux d'images provient, ou a été obtenu, depuis une seule caméra. Dans la suite, et sans perte de généralité, on estime que le procédé est utilisé pour le suivi en temps réel d'une personne cible.

Le procédé 100 comprend une étape 102 d'obtention d'une image à traiter, notée IM1, pour un instant de captation T1.

Suivant un exemple de réalisation, l'image IM1 peut être reçue de manière automatisée. Par exemple, avant le début du suivi, un plan de suivi, indiquant les instants de captation des images à traiter, peut être communiqué à la caméra, par exemple par un dispositif de suivi. Cette dernière peut acquérir une image à chaque instant indiqué dans le plan de suivi et la transmet automatiquement au dispositif de suivi mettant en œuvre le suivi.

Alternativement, et tel que représenté sur la FIGURE 1, l'étape 102 peut comprendre une étape 104 d'émission, vers la caméra, d'une requête de captation de l'image IM1 à l'instant T1 par exemple par le dispositif de suivi. Cette requête peut être émise vers la caméra à l'approche de l'instant T1. A l'instant T1, la caméra peut réaliser une captation de l'image IM1 lors d'une étape 106. L'image IM1 captée peut être transmise au dispositif de suivi, au travers d'une connexion filaire ou sans, éventuellement au travers d'un réseau de communication privé ou publique, tel que le réseau Internet.

Suivant encore une autre alternative, la caméra peut capter des images à une fréquence de captation $F_c$. Dans ce cas, l'étape 104 et 106 sont remplacées par une étape, non représentée, demandant l'image captée à l'instant T1. La caméra, ou un serveur intermédiaire où les images sont mémorisées, peut alors communiquer l'image captée à l'instant T1 au dispositif de suivi, lors de l'étape 108.

Le procédé 100 peut comprendre une phase 110 de suivi réalisée pour l'image IM1 obtenue lors de l'étape 102.

La phase de suivi 110 comprend une étape 112 de réception de l'image à traiter, IM1 captée à l'instant T1.

L'image IM1 est traitée lors d'une étape 114 de détection, pour détecter au moins un objet présent dans ladite image et sa position. Cette détection peut être réalisée avec des solutions bien connues de l'Homme du métier, tel que par exemple le modèle RESNET50. L'étape 114 fournit donc une liste d'au moins un objet détecté, avec leur position, et la zone d'image associée à chaque objet.

Lors d'une étape 116, une distance spatiale $DS_j$ est calculée entre chaque objet détecté et la position de l'objet cible détectée lors d'une itération précédente de la phase de suivi 110. Ainsi, l'étape 116 fournit une distance spatiale $DS_j$ entre chaque objet détecté dans l'image et l'objet cible détectée dans l'image traitée lors d'une itération immédiatement précédente. Lorsqu'il s'agit de la première itération de la phase de suivi, alors chaque objet détecté est un nouvel objet et une nouvelle tracklet est associée audit nouvel objet détecté.

Lors d'une étape 118, un filtrage est appliqué aux distances spatiales $DS_j$ pour ne garder que les objets dont la distance spatiale $DS_j$ est inférieure ou égale à un seuil de distance spatiale, SDS, préalablement définie. Cette étape 118 a pour objectif d'éliminer les objets détectés sur l'image IM1 qui se trouvent en des positions auxquelles l'objet cible ne peut pas se trouver, compte tenu de sa position précédemment détectée. L'étape 118 fournit donc uniquement une liste d'au moins un objet se trouvant en des positions que l'objet cible peut occuper à l'instant T1, sauf si l'objet cible n'est pas visible.

Lors d'une étape 120 une signature d'apparence, ou une signature visuelle, est déterminée pour chaque objet non éliminé par le filtrage spatial de l'étape 118. La détermination de la signature visuelle de chaque objet peut être réalisée avec des solutions bien connues de l'Homme du métier, tel que par exemple un réseau neuronal préalablement entraîné pour cela, prenant en entrée la zone de l'image correspondant audit objet. L'étape 120 fournit donc pour chaque objet ayant passé le filtrage spatial de l'étape 118, une signature visuelle.

Lors d'une étape 122, une distance visuelle $DV_k$ est calculée entre chaque objet ayant passé le filtrage spatial et l'objet cible, en fonction de la signature dudit objet et de l'objet cible. Cette distance peut être une distance euclidienne ou une distance cosinus.

Lors d'une étape 124, l'objet cible est identifié en fonction des distances visuelles calculées lors de l'étape 122. En particulier, l'objet cible correspond à celui des objets détectés sur l'image à traiter, et pour lequel :

- la distance visuelle $DV_k$ est la plus petite, et
- la distance visuelle $DV_k$ est inférieure à un seuil de ré-identification SRI, prédéterminé.

La position de l'objet cible, dans l'image traitée IM1 est alors mémorisée, lors d'une étape 126, en association avec l'instant T1 de captation de l'image traitée IM1. La phase de suivi 110 pour l'image IM1 est terminée et peut être réitérée pour une nouvelle image, notée IM2.

Selon la présente invention, l'image IM2 traitée lors d'une itération suivante n'est pas l'image qui suit immédiatement l'image IM1, de sorte que la caméra peut capter, ou capte, au moins une image, dite non-traitée, entre l'image IM1 et IM2 et qui n'est pas traitée lors d'une phase de suivi.

Suivant un mode de réalisation représenté sur la FIGURE 1, une durée DUR prédéterminée est imposée entre l'instant T1 et l'instant T2 correspondant à l'instant de captation de l'image IM2, de sorte que T2=T1+DUR. Dans tous les cas, la durée DUR est choisie de sorte que DUR>1/$F_c$, avec $F_c$ la fréquence à laquelle la caméra peut capter, ou capte, des images. Suivant un exemple de réalisation nullement limitatif DUR = 2s.

Pour ce faire, le procédé 100 peut comprendre, suite à la phase de suivi 110 une étape 130 de temporisation jusqu'à atteindre l'instant T2. Lorsque l'instant T2 est atteint, ou est sur le point d'être atteint, le procédé 100 est réitérée pour une image IM2 captée à l'instant T2, et ainsi de suite.

Suivant un autre mode de réalisation, non représenté sur la FIGURE 1, le procédé 100, et en particulier la phase de suivi 110, peut être réitérée toutes les N images, avec N≥2, de sorte que la caméra capte, ou est capable de capter, entre les images IM1 et IM2 traitées par deux itérations successives du procédé 100 et en particulier de la phase de suivi 110, au moins une image intermédiaire qui ne sera pas traitée par la phase de suivi 110.

Suivant un exemple de réalisation non limitatif, N=20 images.

Ainsi, quel que soit le mode de réalisation, le procédé 100, et en particulier la phase de suivi 110, est réalisée à une fréquence de détection $F_d$ inférieure à la fréquence $F_c$ de captation à laquelle la caméra capte, ou est configurée pour capter, ou encore est capable de capter, des images. Ainsi, le nombre d'images traitées est diminué ce qui diminue les ressources de calcul et les ressources de communication pour transférer et traiter les images par le dispositif de suivi.

Le seuil de distance spatiale SDS peut être définie de toute les façons adéquates, par exemple par des essais. Suivant des exemples de réalisation, le seuil de distance spatiale SDS peut être définie en fonction des dimensions de l'objet cible. Selon l'invention le seuil de distance spatiale SDS est proportionnelle à la largeur de l'objet cible sur l'image, telle que :

$$SDS = K*L$$

avec L la largeur de l'objet cible et K un coefficient multiplicateur.

Suivant des exemples de réalisation, le coefficient multiplicateur K peut être fonction de la fréquence, ou de la cadence, d'itération de la phase de suivi 110. En effet, l'inventeur a observé qu'un objet cible ne se déplace généralement pas plus de K fois sa propre largeur. Selon des exemples de réalisation K est un nombre réel tel que

$$K = k*D,$$

Avec :

- D la durée, en secondes, séparant les instants de captation de deux images traitées lors de deux itérations successives de la phase de suivi, en particulier D=DUR, ou D=IM2-IM1 ; et
- k un nombre réel. Suivant des exemples de réalisation 1≤k≤2

De manière optionnelle, le procédé 100 peut en outre comprendre une étape 140 d'estimation de la position de l'objet cible à un instant pour lequel aucune image n'a été traité, et se trouvant entre les instants de captation de deux images traitées lors deux itérations successives de la phase de suivi. Cette estimation peut être réalisée en fonction des positions de l'objet cible détectées dans lesdites images traitées.

Selon des exemples de réalisation, la position de l'objet cible peut être estimée suivant une loi de déplacement linéaire, à vitesse constante. Par exemple, soient P1 et P2 les positions de l'objet cible sur deux images traitées IM1 et IM2 captées respectivement aux instants T1 et T2. La position de l'objet cible à chaque instant TIi se trouvant entre les instants T1 et T2, tels que T1<TIi<T2 peut être déterminée en estimant que l'objet cible s'est déplacé linéairement, et à vitesse constante, entre les positions P1 et P2 pendant la durée (T2-T1).

L'étape 140 peut être réalisée pendant lors de la mise en œuvre du procédé 100, par exemple entre deux itérations de la phase de suivi 110. Alternativement, l'étape 140 peut être réalisée après la mise en œuvre toutes les itérations de la phase de suivi 110.

Dans l'exemple décrit en référence à la FIGURE 1, le procédé 100 réalise un suivi en temps réel d'un objet cible. Bien entendu, le procédé selon l'invention peut alternativement être utilisé pour le suivi d'un objet cible qui ne serait pas en temps réel, mais dans un flux d'images capté avant l'exécution du procédé selon l'invention.

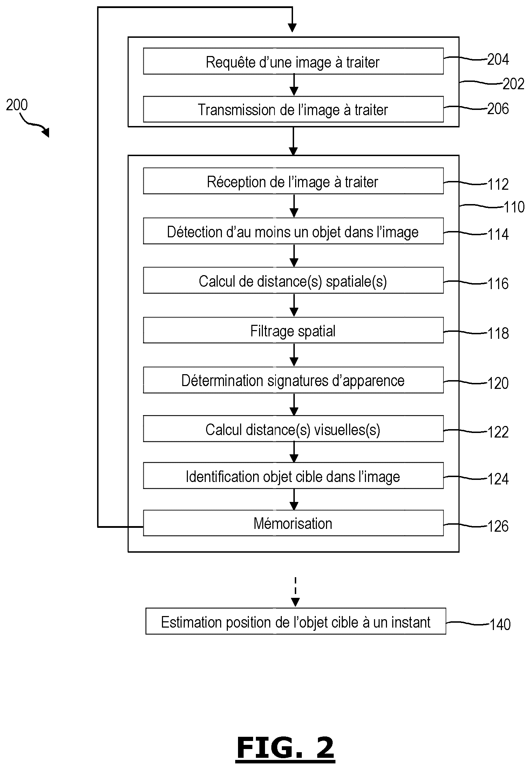

La FIGURE 2 est une représentation schématique d'un exemple de réalisation non limitatif d'un procédé selon la présente invention pour le suivi d'un objet cible au sein d'un flux d'images préalablement capté.

Le procédé 200 de la FIGURE 2 peut être utilisé pour le suivi de tout type d'objets cibles tels que des humains, des animaux, des voitures, etc. Dans la suite, et sans perte de généralité, on estime que le procédé est utilisé pour le suivi d'une personne cible, au sein d'un flux d'images.

Le flux d'images peut être un flux d'images capté par une ou plusieurs caméras, à une fréquence de captation $F_c$. Par exemple, le flux d'images peut être un flux d'images capté par une seule caméra à une fréquence de captation $F_c$.

Le procédé 200 comprend une étape 202 d'obtention d'une image à traiter, notée IM1, pour un instant de captation T1. Cette image IM1 est demandée lors d'une étape 202 par exemple auprès d'un serveur sur lequel le flux d'images est mémorisé. Lors d'une étape 206 l'image IM1 demandée est transmise au dispositif de suivi lors d'une étape 206.

La phase 202 d'obtention de l'image IM1 est suivie par la phase de traitement de l'image IM1 110.

Puis, le procédé 200 est réitéré pour une nouvelle image à traiter IM2 captée à un instant T2. Comme indiqué plus haut en référence à la FIGURE 1, l'image IM2 est choisie de sorte qu'au moins une image non traitée sépare l'image IM1 et l'image IM2. Suivant un exemple de réalisation, l'image IM2 est choisie de sorte que IM2=IM1+N de sorte le procédé 200 est réitérée toutes les N images captées au sein du flux d'images. Alternativement, l'image IM2 est choisie de sorte que T2=T1+DUR, de sorte que les images IM2 et IM1 sont séparées dans le temps d'une durée DUR supérieure à la durée $1/F_c$ séparant les instants de captation de deux images consécutives dans le flux d'images.

Le procédé 200 peut optionnellement comprendre l'étape 140, à l'instar du procédé 100 de la FIGURE 1.

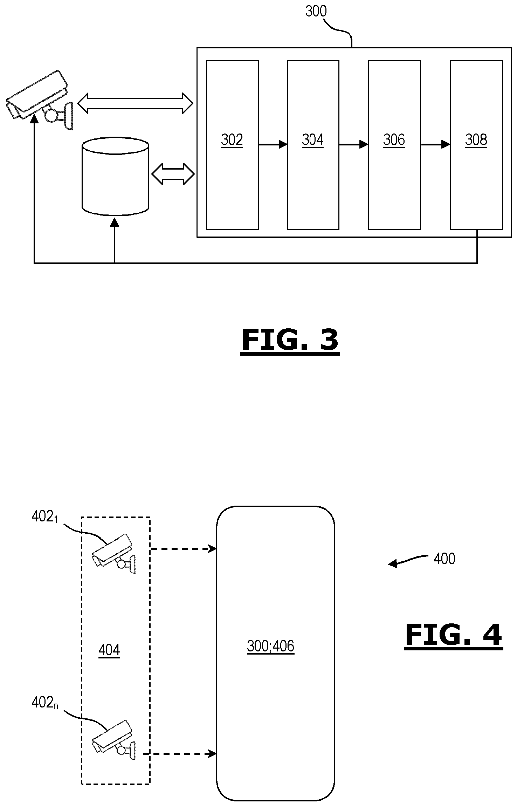

La FIGURE 3 est une représentation schématique d'un exemple de réalisation non limitatif d'un dispositif de suivi selon l'invention.

Le dispositif 300 peut être utilisé pour mettre en œuvre un procédé de suivi selon l'invention, et en particulier le procédé 100 de la FIGURE 1 ou le procédé 200 de la FIGURE 2.

Le dispositif 300 comprend un module 302 de réception d'images à traiter provenant :

- soit d'une base de données, distante ou locale audit dispositif de suivi 300, en particulier dans le cadre d'une recherche et d'un suivi d'un objet cible dans un flux d'images préalablement capté ;
- soit en provenance d'une ou plusieurs caméras, par exemple de caméras de surveillance, en particulier dans le cadre d'un suivi en temps réel d'un objet cible.

Le dispositif 300 comprend en outre un module 304 de détection d'au moins un objet, et de sa position, dans une image traitée reçue par le module 302. Ce module de détection 304 peut être configuré pour exécuter un modèle d'intelligence artificielle, et en particulier un réseau neuronal, préalablement entrainé pour détecter la présence d'un objet dans une image. Un tel modèle peut être un réseau neuronal à convolution, tel que RESNET50, entrainé pour détecter des objets dans une image et indiquer leur position.

Le dispositif 300 comprend en outre un module 306 d'identification de l'objet cible parmi les objets détectés par le module de détection 304 dans l'image traitée. Ce module d'identification 304 peut être configuré pour mettre en œuvre les opérations suivantes :

- pour chaque objet détecté sur l'image traitée, calcul d'une distance spatiale entre la position dudit objet et la position de l'objet cible détectée sur une image précédemment traitée,
- filtrage spatial des objets en fonction desdites distances calculées et d'une valeur seuil de distance spatiale, SDS,
- calcul d'une distance d'apparence entre une signature visuelle de l'objet cible détecté sur l'image précédente et une signature visuelle de chaque objet détecté sur l'image traitée et retenu après l'étape de filtrage, et

- identification de l'objet cible en fonction desdites distances d'apparence.

Le module 306 est en particulier configuré pour mettre en œuvre les étapes 116-124 des procédés 100 ou 200 des FIGURES 1 ou 2.

Le dispositif 300 comprend en outre un module 308 de requête d'images à traiter auprès de la base de données ou de l'au moins une caméra. Ce module 308 est configuré de sorte que deux images traitées d'un flux d'images soient séparées d'au moins une image non traitée dudit flux d'images :

- soit en imposant une durée de temporisation entre les instants de captation de deux images traitées consécutivement ;
- soit en imposant un nombre prédéterminé d'images intermédiaires non traitées entre deux images traitées consécutivement.

Au moins un des modules 302-308 peut être un module indépendant des autres modules 302-308. Au moins deux des modules 302-308 peuvent être intégrés au sein d'un même module

Chaque module 302-308 peut être :

- un module matériel (hardware), tel qu'un composant électronique de type processeur, puce électronique, calculateur, ordinateur, serveur, etc. ; ou
- un module logiciel (software), tel qu'une application ou un programme d'ordinateur, exécuté par un composant électronique de type processeur, puce électronique, calculateur, etc.

Le dispositif 300 peut être au moins un serveur, un ordinateur, un processeur, ou une puce électronique.

Le dispositif 300 peut être au moins un programme d'ordinateur, ou une machine virtuelle, exécuté(e) par un serveur, un ordinateur, un processeur, ou une puce électronique, etc.

La FIGURE 4 est une représentation schématique d'un exemple de réalisation non limitatif d'un système selon l'invention de suivi en temps réel d'un objet cible.

Le système 400 peut être utilisé pour mettre en œuvre un procédé de suivi selon l'invention, et en particulier le procédé 100 de la FIGURE 1.

Le système 400 peut être utilisé pour le suivi d'un objet cible de tout type, et en particulier d'une personne cible, à partir d'au moins un flux vidéo provenant de N caméras $402_1$-$402_n$ dudit système 400, distribuées dans l'espace et formant un réseau 404 de caméras, avec n≥1. Alternativement, le système 400 peut être utilisé pour le suivi d'un objet cible de tout type, et en particulier d'une personne cible, à partir d'un flux vidéo mémorisé dans une base de données (non représentée sur la FIGURE 4).

Le système 400 comprend en outre un dispositif de suivi selon l'invention 406, tel que par exemple le dispositif 300 de la FIGURE 3.

Le dispositif 406 peut être local aux caméras $402_1$-$402_n$ ou distant des caméras $402_1$-$402_n$.

Le dispositif 406 peut être relié à chacune des caméras $402_1$-$402_n$ par une connexion filaire ou sans fil.

Bien entendu l'invention n'est pas limitée aux exemples qui viennent d'être décrits.

**Revendications**

1. Procédé (100;200) de suivi d'un objet cible dans un flux d'images capté par une caméra ($402_1$-$402_n$), à une fréquence de captation, $F_c$, ledit procédé (100;200) comprenant plusieurs itérations d'une phase de suivi (110), mise en œuvre individuellement pour plusieurs images, dite traitées, dudit flux d'images, et comprenant les étapes suivantes :

    - détection (114) d'au moins un objet, et de sa position, dans l'image traitée, et
    - identification (116-124) dudit objet cible parmi l'au moins un objet détecté dans ladite image traitée ;
    ladite phase de détection (110) étant réalisée à une fréquence de détection, $F_s$, inférieure à ladite fréquence de captation $F_c$, de sorte que deux images traitées lors de deux itérations successives de la phase de suivi sont séparées d'au moins une image non-traitée à laquelle ladite phase de suivi n'est pas appliquée ;
    ladite étape d'identification d'un objet cible sur une image traitée comprenant les étapes suivantes :

        - pour chaque objet détecté sur ladite image traitée, calcul (116) d'une distance spatiale entre la position dudit objet et la position de l'objet cible détectée sur une image précédemment traitée,
        - filtrage spatiale (116;118) des objets en fonction desdites distances calculées et d'une valeur seuil de distance spatiale, SDS, prédéterminée,
        - calcul (120;122) d'une distance d'apparence entre une signature visuelle de l'objet cible détecté sur l'image précédemment traitée et une signature visuelle de chaque objet retenu après l'étape de filtrage, et
        - identification (124) de l'objet cible en fonction desdites distances d'apparence ;

    ladite valeur SDS étant proportionnelle à la largeur de l'objet cible sur ladite image traitée, telle que :

$$SDS=K*L$$

avec L la largeur de l'objet cible et K un coefficient multiplicateur.

2. Procédé (100;200) selon la revendication précédente, **caractérisé en ce qu'**il comprend une étape (140) d'estimation de la position de l'objet cible à un instant se trouvant entre les instants de captation de deux images traitées lors deux itérations successives de la phase de détection, en fonction des positions dudit objet cible dans lesdites images traitées.

3. Procédé (100;200) selon l'une quelconque des revendications précédentes, **caractérisé en ce que** la phase de suivi (110) est mise en œuvre pour chaque image toutes les N image(s), avec N≥2, et préférentiellement N≥20, de sorte que deux itérations successives de la phase de suivi (110) sont appliquées à deux images séparées, dans le temps, d'au moins une image, et en particulier de N images, non traitées.

4. Procédé (100;200) selon l'une quelconque des revendications 1 ou 2, **caractérisé en ce que** la phase de suivi est réalisée pour chaque image captée toutes les DUR secondes.

5. Procédé (200) selon l'une quelconque des revendications précédentes, **caractérisé en ce que** le flux d'images est capté préalablement à la première itération de la phase de détection (110) de sorte que le suivi de l'objet cible n'est pas réalisé en temps réel.

6. Procédé (100) selon l'une quelconque des revendications 1 à 4, **caractérisé en ce qu'**il est mis en œuvre pour réaliser un suivi en temps réel de l'objet cible, ledit procédé (100) comprenant en outre une étape (106) de transmission de chaque image traitée de la caméra ($402_1$-$402_n$) vers un dispositif de suivi (300;406)

7. Procédé (100) selon la revendication précédente, **caractérisé en ce que** l'étape de transmission (106) d'une image traitée de la caméra ($402_1$-$402_n$) vers le dispositif de suivi (300;406) est réalisée sur requête dudit dispositif de suivi (300;406).

8. Procédé (100) selon l'une quelconque des revendications 6 ou 7, **caractérisé en ce que** la caméra ($402_1$-$402_n$) est agencée pour capter uniquement les images traitées.

9. Procédé (100;200) selon l'une quelconque des revendications précédentes, **caractérisé en ce que** l'étape de détection (114) est réalisée par un modèle d'intelligence artificielle, et en particulier par un réseau neuronal, préalablement entraîné pour détecter la présence d'un objet dans une image.

10. Programme d'ordinateur comprenant des instructions exécutables qui, lorsqu'elles sont exécutées par un appareil informatique, mettent en en œuvre toutes les étapes du procédé (100;200) de suivi selon l'une quelconque des revendications précédentes.

11. Dispositif (300;406) de suivi d'un objet cible comprenant des moyens configurés pour mettre en œuvre toutes les étapes du procédé (100;200) de suivi selon l'une quelconque des revendications 1 à 9.

12. Système (400) de suivi d'un objet cible comprenant :

- au moins une caméra ($402_1$-$402_n$) de fréquence de captation d'un flux d'images, $F_c$, et
- un dispositif (300;406) selon la revendication précédente.

**Patentansprüche**

1. Verfahren (100; 200) für die Verfolgung eines Zielobjekts in einem von einer Kamera ($402_1$ bis $402_n$) mit einer Aufnahmefrequenz $F_c$ aufgenommen Bildstrom, wobei das Verfahren (100; 200) mehrere Iterationen einer Verfolgungsphase (110), die individuell für mehrere, als verarbeitet bezeichnete, Bilder des Bildstroms implementiert wird, umfasst und die folgenden Schritte umfasst:

- Erkennen (114) mindestens eines Objekts und seiner Position in dem verarbeiteten Bild, und
- Identifizieren (116 bis 124) des Zielobjekts unter dem mindestens einen in dem verarbeiteten Bild erkannten Objekt;

wobei die Verfolgungsphase (110) mit einer Erkennungsfrequenz $F_s$ durchgeführt wird, die niedriger ist als die Aufnahmefrequenz $F_c$, so dass zwei während zwei aufeinanderfolgenden Iterationen der Verfolgungsphase verarbeitete Bilder durch mindestens ein nicht verarbeitetes Bild, auf das die Verfolgungsphase nicht angewendet wird, getrennt sind;
wobei der Schritt des Identifizierens eines Zielobjekts auf einem verarbeiteten Bild die folgenden Schritte umfasst:

- für jedes auf dem verarbeiteten Bild erkannte Objekt, Berechnen (116) eines räumlichen Abstands zwischen der Position des Objekts und der Position des auf einem zuvor verarbeiteten Bild erkannten Zielobjekts,

- räumliches Filtern (116; 118) der Objekte in Abhängigkeit von den berechneten Abständen und einem vorbestimmten Schwellenwert für räumlichen Abstand SDS,

- Berechnen (120; 122) eines Erscheinungsabstands zwischen einer visuellen Signatur des auf dem zuvor verarbeiteten Bild erkannten Zielobjekts und einer visuellen Signatur jedes nach dem Filterschritt erhaltenen Objekts, und

- Identifizieren (124) des Zielobjekts in Abhängigkeit von den Erscheinungsabständen;

wobei der SDS-Wert proportional zur Breite des Zielobjekts auf dem verarbeiteten Bild ist, wie:

$$SDS = K*L$$

wobei L die Breite des Zielobjekts und K ein Multiplikationskoeffizient sind.

2. Verfahren (100;200) nach dem vorstehenden Anspruch, **dadurch gekennzeichnet, dass** es einen Schritt (140) des Schätzens der Position des Zielobjekts zu einem Zeitpunkt, der zwischen den Aufnahmezeitpunkten zweier während zwei aufeinanderfolgenden Iterationen der Erkennungsphase verarbeiteter Bilder liegt, in Abhängigkeit von den Positionen des Zielobjekts in den verarbeiteten Bildern umfasst.

3. Verfahren (100; 200) nach einem der vorstehenden Ansprüche, **dadurch gekennzeichnet, dass** die Verfolgungsphase (110) für jedes Bild alle N Bilder durchgeführt wird, wobei $N \geq 2$, und vorzugsweise $N \geq 20$, so dass zwei aufeinanderfolgende Iterationen der Verfolgungsphase (110) auf zwei nicht verarbeitete Bilder, die zeitlich durch mindestens ein Bild, und insbesondere durch N Bilder, getrennt sind, angewendet werden.

4. Verfahren (100; 200) nach einem der Ansprüche 1 oder 2, **dadurch gekennzeichnet, dass** die Verfolgungsphase für jedes alle DUR Sekunden aufgenommene Bild durchgeführt wird.

5. Verfahren (200) nach einem der vorstehenden Ansprüche, **dadurch gekennzeichnet, dass** der Bildstrom vor der ersten Iteration der Erkennungsphase (110) aufgenommen wird, so dass die Verfolgung des Zielobjekts nicht in Echtzeit durchgeführt wird.

6. Verfahren (100) nach einem der Ansprüche 1 bis 4, **dadurch gekennzeichnet, dass** es zum Durchführen einer Echtzeitverfolgung des Zielobjekts implementiert wird, wobei das Verfahren (100) ferner einen Schritt (106) des Übertragens jedes verarbeiteten Bildes der Kamera ($402_1$ bis $402_n$) zu einer Verfolgungsvorrichtung (300; 406) umfasst.

7. Verfahren (100) nach dem vorstehenden Anspruch, **dadurch gekennzeichnet, dass** der Schritt des Übertragens (106) eines verarbeiteten Bildes von der Kamera ($402_1$ bis $402_n$) zu der Verfolgungsvorrichtung (300; 406) auf Anforderung der Verfolgungsvorrichtung (300; 406) durchgeführt wird.

8. Verfahren (100) nach einem der Ansprüche 6 oder 7, **dadurch gekennzeichnet, dass** die Kamera ($402_1$ bis $402_n$) dazu eingerichtet ist, ausschließlich die behandelten Bilder aufzunehmen.

9. Verfahren (100; 200) nach einem der vorstehenden Ansprüche, **dadurch gekennzeichnet, dass** der Erkennungsschritt (114) durch ein Modell künstlicher Intelligenz, und insbesondere durch ein neuronales Netz, durchgeführt wird, das zuvor zum Erkennen der Anwesenheit eines Objekts in einem Bild trainiert wurde.

10. Computerprogramm, umfassend ausführbare Anweisungen, die, wenn sie durch eine Rechnereinrichtung ausgeführt werden, alle Schritte des Verfolgungsverfahrens (100; 200) gemäß einem der vorstehenden Ansprüche implementieren.

11. Vorrichtung (406) für die Verfolgung eines Zielobjekts, umfassend Mittel, die zum Implementieren aller Schritte des Verfolgungsverfahrens (100; 200; 300) gemäß einem der Ansprüche 1 bis 9 konfiguriert sind.

12. System (400) für die Verfolgung eines Zielobjekts, umfassend:

- mindestens eine Kamera ($402_1$ bis $402_n$) mit einer Aufnahmefrequenz eines Bildstroms $F_c$, und
- eine Vorrichtung (300; 406) nach dem vorstehenden Anspruch.

**Claims**

1. A method (100;200) for tracking a target object in an image stream captured by a camera ($402_1$-$402_n$), at a capture frequency, $F_c$, said method (100;200) comprising several iterations of a tracking phase (110), implemented individually for several images, called processed images, of said image stream, and comprising the following steps:

- detecting (114) at least one object, and its position, in the processed image, and
- identifying (116-124) said target object among the at least one object detected in said processed image;

said tracking phase (110) being carried out at a detection frequency, $F_s$, lower than said capture frequency $F_c$, so that two images processed during two successive iterations of the tracking phase are separated by at least one non-processed image to which said tracking phase is not applied;

the step of identifying a target object in a processed image comprising the following steps:

- for each object detected in said processed image, calculating (116) a spatial distance between the position of said object and the position of the target object detected on a previously processed image,
- spatial filtering (116; 118) of the objects based on said calculated distances and a predetermined spatial distance threshold value, SDS
- calculating (120; 122) an appearance distance between a visual signature of the target object detected on the previously processed image and a visual signature of each object retained after the filtering step, and
- identifying (124) the target object based on said appearance distances;

said SDS value being proportional to the width of the target object on said processed image, such that:

$$SDS = K*L$$

where L is the width of the target object and K is a multiplier coefficient.

2. The method (100;200) according to the preceding claim, **characterized in that** it comprises a step (140) of estimating the position of the target object at a time located between the capture times of two processed images during two successive iterations of the tracking phase, based upon the positions of said target object in said processed images.

3. The method (100;200) according to any one of the preceding claims, **characterized in that** the tracking phase (110) is implemented for each image every N image(s), where N≥2, and preferentially N≥20, so that two successive iterations of the tracking phase (110) are applied to two images separated, over time, from at least one image, and in particular from N images, which are not processed.

4. The method (100; 200) according to any one of claims 1 or 2, **characterized in that** the tracking phase is carried out for each image captured every DUR seconds.

5. The method (200) according to any one of the preceding claims, **characterized in that** the image stream is captured prior to the first iteration of the tracking phase (110) so that the target object is not tracked in real time.

6. The method (100) according to any one of claims 1 to 4, **characterized in that** it is implemented to carry out real-time tracking of the target object, said method (100) further comprising a step (106) of transmitting each processed image from the camera ($402_1$-$402_n$) to a tracking device (300; 406)

7. The method (100) according to the preceding claim, **characterized in that** the step (106) of transmitting a processed image from the camera ($402_1$-$402_n$) to the tracking device (300; 406) is carried out at the request of said tracking device (300; 406).

8. The method (100) according to any one of claims 6 or 7, **characterized in that** the camera ($402_1$-$402_n$) is arranged to capture only the processed images.

9. The method (100; 200) according to any one of the preceding claims, **characterized in that** the detection step (114) is carried out by an artificial intelligence model, and in particular by a neural network, previously trained to detect the presence of an object in an image.

10. A computer program comprising executable instructions, which, when they are executed by a computer apparatus, implement all the steps of the tracking method (100;200) according to any one of the preceding claims.

11. A device (300;406) for tracking a target object comprising means configured to implement all the steps of the tracking method (100;200) according to any one of claims 1 to 9.

12. A system (400) for tracking a target object comprising:

- at least one camera ($402_1$-$402_n$) with an image stream capture frequency, $F_c$, and
- a device (300;406) according to the preceding claim.

100

| Requête de captation d'une image à traiter |—104
| Captation d'une image à traiter |—106
| Transmission de l'image à traiter |—108

102

| Réception de l'image à traiter |—112
| Détection d'au moins un objet dans l'image |—114
| Calcul de distance(s) spatiale(s) |—116
| Filtrage spatial |—118
| Détermination signatures d'apparence |—120
| Calcul distance(s) visuelles(s) |—122
| Identification objet cible dans l'image |—124
| Mémorisation |—126

110

| Temporisation |—130

| Estimation position de l'objet cible à un instant |—140

# FIG. 1

**FIG. 2**

300

302 → 304 → 306 → 308

**FIG. 3**

402₁

404

402ₙ

300;406

400

**FIG. 4**

**EP 4 261 777 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2022004768 A1
- EP 3839816 A1
- CA 3156840 A1